# FASCICULE DE BREVET EUROPEEN

(11) **EP 0 529 734 B1**
(45) Date de publication et mention de la délivrance du brevet: **02.01.1997**
(21) Numéro de dépôt: 92202582.0
(22) Date de dépôt: 25.08.1992
(51) Int. Cl.: H04N 7/173

(54) **Dispositif d'amplification pour un réseau de distribution de télévision par câble**
Verstärkereinrichtung für ein Kabelfernseh-Verteilungsnetz
Amplifying device for a cable television network

(30) Priorité: 28.08.1991 FR 9110671
(43) Date de publication de la demande: 03.03.1993
(73) Titulaire: PHILIPS ELECTRONIQUE GRAND PUBLIC, 92150 Suresnes (FR); Philips Electronics N.V., 5621 BA Eindhoven (NL)
(72) Inventeur: Gris, Joel, F-75008 Paris (FR)
(74) Mandataire: Caron, Jean

(56) Documents cités:
- FR-A- 2 290 100
- US-A- 1 743 691
- US-A- 3 806 813

## Description

La présente invention concerne un dispositif d'amplification, destiné à être inséré dans un câble d'un réseau de distribution de télévision par câble, comportant deux voies en parallèle réunies l'une à l'autre à chacune de leurs extrémités pour former à chaque fois une borne d'entrée/sortie, la première voie étant munie d'un amplificateur amplifiant dans une première bande de fréquences, la seconde voie étant munie d'un amplificateur amplifiant dans une direction opposée à celle du premier amplificateur et dans une seconde bande de fréquences exclusive de la première, avec à partir de chacune des bornes un premier élément de filtrage à caractéristique d'un premier type, pour transmettre ou recevoir les signaux de la première voie, et un deuxième élément de filtrage à caractéristique d'un second type complémentaire du premier pour transmettre ou recevoir les signaux de la seconde voie.

De tels dispositifs sont utilisés entre autres dans des systèmes de distribution de télévision par câble connus sous le nom de "MATV" ou "CATV", concernant respectivement la distribution à l'intérieur d'un immeuble ou la distribution dans une communauté urbaine.

Dans un tel dispositif, les amplificateurs sont rebouclés l'un sur l'autre et la réaction positive qui en résulte entrainerait la mise en oscillation de l'ensemble en l'absence de précautions adaptées ; la présence d'éléments de filtrage qui aiguillent vers chaque amplificateur des bandes passantes exclusives l'une de l'autre permet d'empêcher l'oscillation. C'est ce qu'on appelle l'isolation de boucle. Toutefois ces éléments de filtrage doivent avoir des caractéristiques très performantes, car l'atténuation des éléments de filtrage doit toujours être supérieure, à une fréquence déterminée, au gain des amplificateurs à cette fréquence, ce qui implique que ces éléments sont coûteux. En outre, même lorsque l'atténuation est suffisante, l'adaptation d'impédance est souvent mauvaise en dehors des bandes passantes utiles de chaque amplificateur, et cela peut suffire à provoquer des oscillations, car certains amplificateurs oscillent lorsqu'ils sont mal adaptés.

Dans le document US-A-1 743 691, il est préconisé d'introduire un circuit bouchon avec une fréquence de résonnance placée dans la solution de continuité entre les susdites bandes passantes. Cette disposition accroît la performance du filtrage, mais le principe de base reste néanmoins le même, avec des filtres conventionnels qui doivent avoir des performances élevées.

L'invention a pour but de procurer un dispositif d'amplification qui soit économique parce que simple, et qui néanmoins présente une très forte isolation de boucle et une bonne adaptation en tout point du système et à toutes les fréquences, même en dehors des bandes passantes.

Elle est basée sur l'idée d'introduire des éléments qui ajoutent des composantes annulant la réaction positive, au lieu de chercher à améliorer les performances des filtres.

A cet effet un dispositif d'amplification selon l'invention est remarquable en ce que les deux voies sont réunies par un ensemble fait de la mise en série d'éléments et comportant, à partir de la première voie, un troisième élément de filtrage à caractéristique du second type, et un quatrième élément de filtrage à caractéristique du premier type, et en ce que, l'ensemble constitué par les éléments de filtrage étant équilibré, le point commun au troisième et au quatrième élément de filtrage est relié à la masse par une charge adaptée, c'est-à-dire en principe une résistance égale à l'impédance caractéristique du câble, et un élément inverseur de la polarité des signaux est inséré en série entre deux des éléments de filtrage.

Les buts de l'invention sont également atteints, dans une variante de réalisation, du fait que les deux voies sont réunies par un ensemble fait de la mise en série d'éléments et comportant, à partir de la première voie, un troisième élément de filtrage à caractéristique du second type, et un quatrième élément de filtrage à caractéristique du premier type, en ce que, l'ensemble constitué par les éléments de filtrage étant équilibré, le point commun au troisième et au quatrième élément de filtrage est relié à la masse par une charge adaptée, c'est-à-dire en principe une résistance égale à l'impédance caractéristique du câble, et il est prévu un couplage magnétique entre le premier et le quatrième élément de filtrage.

Dans ces deux variantes, les premier et quatrième éléments d'une part, et les second et troisième éléments d'autre part, sont avantageusement égaux entre eux.

Dans une autre variante de réalisation qui permet encore d'atteindre les buts de l'invention, le dispositif est remarquable en ce qu'il est muni d'un transformateur qui possède un enroulement connecté en parallèle sur l'un des éléments de filtrage transmettant les signaux de l'une des voies, et un autre enroulement dont une extrémité est reliée à la masse via une charge adaptée, c'est-à-dire en principe une résistance égale à l'impédance caractéristique du câble, et dont l'autre extrémité est connectée à l'autre des voies.

Les éléments de filtrage peuvent être plus ou moins complexes selon la sélectivité recherchée. Néanmoins l'isolation de boucle est suffisante quand des éléments de filtrage à caractéristique du premier type sont de simples inductances, et/ou des éléments de filtrage à caractéristique du second type sont de simples condensateurs. Le quotient de la valeur d'une inductance par celle d'une capacité est alors avantageusement égal au carré de la valeur de l'impédance caractéristique du câble.

L'élément inverseur de la polarité des signaux est avantageusement un transformateur, laquel est avantageusement bobiné sur un noyau de ferrite.

La description qui va suivre, en regard des dessins annexés décrivant des exemples non limitatifs fera bien comprendre comment l'invention peut être réalisée.

La figure 1 est un schéma d'un premier mode de réalisation de l'invention.

La figure 2 est un schéma d'une variante de réalisation du schéma de la figure 1.

La figure 3 est un schéma d'une autre variante de réalisation du schéma de la figure 1.

Les figures 4 et 5 sont des schémas d'un second mode et d'un troisième mode de réalisation de l'invention.

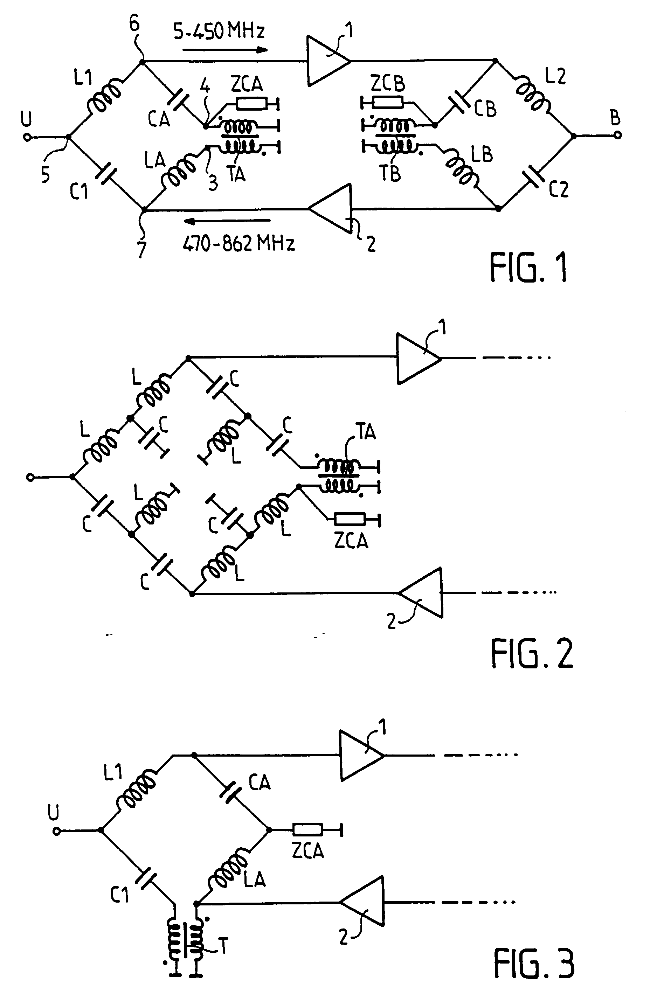

Sur la figure 1 un dispositif d'amplification pour un réseau de distribution de télévision par câble comporte une première voie allant d'une entrée U vers une entrée B via un amplificateur 1 amplifiant dans une première bande de fréquences des signaux "remontants" envoyés par des usagers connectés en aval à l'entrée U, et une seconde voie allant de l'entrée B vers l'entrée U via un amplificateur 2 amplifiant, dans une direction opposée à celle du premier amplificateur 1 et dans une seconde bande de fréquences exclusive de la première, des signaux "descendants" envoyés à des usagers par une centrale connectée en amont à l'entrée B du dispositif. Les signaux remontants par la voie 1 occupent par exemple la bande de fréquences 5-450 MHz et les signaux descendants par la voie 2 occupent la bande de fréquences 470-862 MHz.

Un premier élément de filtrage à caractéristique d'un premier type, ici du type passe-bas, fait d'une simple inductance L1, est connecté à l'entrée U pour transmettre les signaux de l'entrée U vers l'amplificateur 1 de la première voie, et un second élément de filtrage, à caractéristique d'un second type complémentaire du premier, ici de type passe-haut, fait d'une simple capacité C1, est connecté à cette même entrée U pour transmettre les signaux issus de l'amplificateur 2 de la seconde voie.

Le dispositif de la figure 1 comporte en outre un deuxième ensemble d'éléments identiques, placés de façon symétrique du coté de l'entrée B à droite sur le schéma, avec une simple capacité C2 connectée à l'entrée B pour transmettre les signaux de l'entrée B vers l'amplificateur 2 de la seconde voie, et une simple inductance L2 connectée à cette même entrée B pour transmettre les signaux issus de l'amplificateur 1 de la première voie.

Il est clair que la sortie de l'amplificateur 1 étant rebouclée sur l'entrée de l'amplificateur 2 via L2 et C2, et de même la sortie de l'amplificateur 2 étant rebouclée sur l'entrée de l'amplificateur 1 via C1 et L1, il y a grand risque d'oscillations spontanées. Pour les éviter, il faudrait prévoir un filtrage très efficace qui laisse passer, dans le présent exemple, seulement les fréquences inférieures à 450 MHz vers l'amplificateur 1, et seulement les fréquences supérieures à 470 MHz vers l'amplificateur 2, et dont l'atténuation en dehors de ces gammes soit supérieure au gain des amplificateurs. Il est évident que si en outre on désire avoir beaucoup de gain, les filtres seront nécessairement très coûteux, et ceci d'autant plus que les limites des bandes de fréquence sont plus proches l'une de l'autre.

Selon l'invention il est prévu un troisième élément de filtrage à caractéristique du second type, c'est-à-dire passe-haut, fait d'une simple capacité CA connectée à la première voie, en série avec un quatrième élément de filtrage à caractéristique du premier type, c'est-à- dire passe-bas, fait d'une simple inductance LA connectée à la seconde voie, le point commun au troisième et au quatrième élément de filtrage, dans lequel est inséré un transformateur TA, qui inverse la polarité des signaux, est relié à la masse par une charge adaptée ZCA, à savoir une résistance égale à l'impédance caractéristique du câble. Cette charge est branchée ici du côté de CA (point 4), mais elle pourrait aussi bien être branchée du côté de LA (point 3). Le transformateur TA est inséré en série entre l'inductance LA et la capacité CA, c'est-à-dire entre deux des éléments de filtrage. Avec le sens de bobinage des enroulements du transformateur, indiqué de la façon habituelle par deux points sur la figure, ce transformateur inverse les signaux présents au point 3 pour les appliquer au point 4, ou vice-versa. Les différents éléments portent des références distinctes pour permettre de les identifier individuellement sur les figures, mais en pratique les inductances L1 et LA sont égales, et de même les capacités C1 et CA sont égales. En outre, pour avoir une bonne adaptation d'impédance, il est préférable que le quotient de la valeur d'une inductance par celle d'une capacité soit égal au carré de la valeur de l'impédance caractéristique du câble : L1 / C1 ou L1 / CA ou LA / CA ou LA / C1 est égal à ZCA², aux tolérances près, bien entendu.

De préférence des éléments identiques sont branchés de la même façon du coté de l'entrée B, les éléments CB, LB, TB, ZCB correspondant respectivement aux éléments CA, LA, TA, ZCA décrits ci-dessus.

Le fonctionnement de cet ensemble peut être expliqué de la façon suivante : un signal sur l'entrée U parvient au point 4 via L1 et CA, mais aussi au point 3 via C1 et LA. Si l'ensemble est équilibré, c'est-à-dire si CA = C1 et LA = L1, le signal en 3 est donc égal au signal en 4, et après inversion par le transformateur TA, il lui est exactement opposé et les deux signaux s'annulent sur la charge ZCA. L'entrée U ne "voit" donc pas cette charge. Le même raisonnement s'applique à partir du point 7 : le signal de sortie de l'amplificateur 2, appliqué au point 7, parvient au point 6 via C1 et L1, mais aussi via LA et CA. Si l'ensemble est équilibré, ces deux chemins sont égaux et après inversion par le transformateur TA, les deux signaux sont exactement opposés et s'annulent en 6, c'est-à-dire à l'entrée de l'amplificateur 1. Bien entendu il en est de même pour le chemin entre la sortie de l'amplificateur 1 et l'entrée de l'amplificateur 2. Par ailleurs en ce qui concerne l'adaptation, à partir du point 6 par exemple, elle est correcte pour les fréquences basses qui traversent l'inductance L1 et sont chargées par la ligne adaptée branchée en U, et elle est également correcte pour les fréquences hautes qui traversent la capacité CA et sont chargées par l'impédance adaptée ZCA. Un raisonnement réciproque peut être conduit à partir du point 7. Ainsi tous les amplificateurs sont chargés à toutes les fréquences par une impédance correcte et le signal de sortie d'un amplificateur n'atteint pas l'autre amplificateur.

Ainsi l'isolation de boucle est fonction de l'équilibrage entre les éléments, et indépendant des pentes d'atténuation des filtres. Par exemple avec le schéma de la figure 1, la fonction de filtrage en fréquence a une pente de seulement 3 dB par octave, et néanmoins l'isolation de boucle peut aisément atteindre 50 dB.

Sur la figure 2 et les suivantes, seulement la partie gauche du dispositif a été représentée puisque la partie droite s'en déduit aisément par symétrie. La figure 2 montre le schéma d'un dispositif, dans lequel les éléments simples des figures 1 et 2 ont été remplacés par des éléments plus complexes : chaque capacité (CA, CB, C1, C2 de la figure 1) est remplacée par un montage en T fait de deux capacités C en série, et d'une inductance L entre le point commun des deux capacités et la masse, et chaque inductance (LA, LB, L1, L2 de la figure 1) est remplacée par un montage en T fait de deux inductances L en série, et d'une capacité C entre le point commun des deux inductances et la masse. Le transformateur TA est placé comme sur la figure 1.

Il est également possible d'utiliser d'autres formes d'éléments à caractéristiques complémentaires, par exemple des éléments coupe-bande comme éléments d'un type et des éléments passe-bande comme éléments de l'autre type (non représenté).

Le dispositif représenté par le schéma de la figure 3 est identique à celui de la figure 1, à l'exception de la position du transformateur qui est maintenant inséré entre les éléments C1 et LA. Le transformateur TA peut en fait être placé en série entre n'importe lesquels des éléments de filtrage : il est aussi possible de le placer entre L1 et C1 ou entre L1 et CA, bien que ceci n'ait pas été représenté pour diminuer le nombre de figures. Tout ceci s'appliquerait bien entendu aussi à la figure 2.

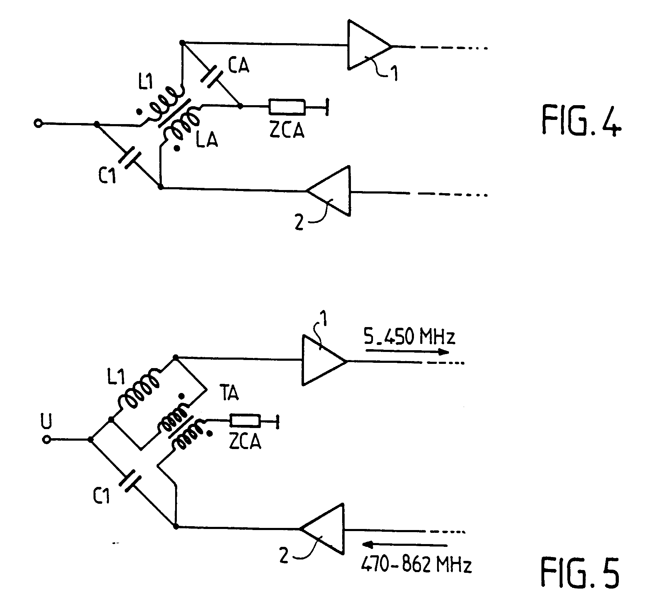

Le dispositif représenté par le schéma de la figure 4 est un peu différent, bien que son principe soit toujours le même. Il comprend toujours une seconde capacité CA en série avec une seconde inductance LA, dont le point commun est relié à la masse par la charge adaptée ZCA, mais les deux inductances sont magnétiquement couplées entre elles. Le transformateur TA des figures précédentes est absent mais le couplage magnétique entre les inductances L1 et LA, qui sont dessinées comme des enroulements d'un transformateur, avec les sens d'enroulement indiqués, joue le même rôle. Néanmoins ce montage est délicat car le bon couplage entre les inductances peut être difficile à obtenir.

Le dispositif représenté sur la figure 5 a l'avantage de permettre l'économie des deux capacités CA et CB et des deux inductances LA et LB de la figure 1. Dans ce montage, un transformateur possède un premier enroulement connecté en parallèle sur l'élément de filtrage L qui transmet les signaux à la première voie, et un second enroulement dont une première extrémité est reliée à la masse via la charge adaptée ZCA, et dont la seconde extrémité est connectée à la seconde voie. On pourrait aussi imaginer que le premier enroulement soit connecté en parallèle avec la capacité C, et que la seconde extrémité du second enroulement soit reliée à la première voie.

Les schémas ci-dessus s'appliquent à des lignes coaxiales, c'est-à-dire dissymétriques, qui sont aujourd'hui à peu près seules à être employées dans des réseaux de distribution par cable. Il est toutefois évident que si l'homme du métier désirait utiliser des lignes bifilaires symétriques il pourrait facilement, le cas échéant, "dédoubler" tous ces schémas pour les appliquer à de telles lignes.

## Revendications

1. Dispositif d'amplification, destiné à être inséré dans un câble d'un réseau de distribution de télévision par câble, comportant deux voies en parallèle réunies l'une à l'autre à chacune de leurs extrémités pour former à chaque fois une borne d'entrée/sortie (U, B), la première voie étant munie d'un amplificateur (1) amplifiant dans une première bande de fréquences, la seconde voie étant munie d'un amplificateur (2) amplifiant dans une direction opposée à celle du premier amplificateur et dans une seconde bande de fréquences exclusive de la première, avec à partir de chaque borne un premier élément de filtrage (L1) à caractéristique d'un premier type, pour transmettre ou recevoir les signaux de la première voie, et un deuxième élément de filtrage (C1) à caractéristique d'un second type complémentaire du premier pour transmettre ou recevoir les signaux de la seconde voie, caractérisé en ce que les deux voies sont réunies par un ensemble fait de la mise en série d'éléments et comportant, à partir de la première voie, un troisième élément de filtrage (CA) à caractéristique du second type, et un quatrième élément de filtrage (LA) à caractéristique du premier type et en ce que, l'ensemble (L1, C1, CA, LA) constitué par les éléments de filtrage étant équilibré, le point commun (3, 4) au troisième et au quatrième élément de filtrage est relié à la masse par une charge adaptée (ZCA), c'est-à-dire en principe une résistance égale à l'impédance caractéristique du câble, et un élément (TA) inverseur de la polarité des signaux est inséré en série entre deux des éléments de filtrage.

2. Dispositif d'amplification, destiné à être inséré dans un câble d'un réseau de distribution de télévision par câble, comportant deux voies en parallèle réunies l'une à l'autre à chacune de leurs extrémités pour former à chaque fois une borne d'entrée/sortie (U, B), la première voie étant munie d'un amplificateur (1) amplifiant dans une première bande de fréquences, la seconde voie étant munie d'un amplificateur (2) amplifiant dans une direction opposée à celle du premier amplificateur et dans une seconde bande de fréquences exclusive de la première, avec à partir de chacune des bornes un premier élément de filtrage (L1) à caractéristique d'un premier type pour transmettre ou recevoir les signaux de la première voie, et un deuxième élément de filtrage (C1) à caractéristique d'un second type complémentaire du premier, pour transmettre ou recevoir les signaux de la seconde voie, caractérisé en ce que les deux voies sont réunies par un ensemble fait de la mise en série d'éléments et comportant, à partir de la première voie, un troisième élément de filtrage (CA) à caractéristique du second type, et un quatrième élément de filtrage (LA) à caractéristique du premier type, et en ce que, l'ensemble (L1, C1, CA, LA) constitué par les éléments de filtrage étant équilibré, le point commun au troisième et au quatrième élément de filtrage est relié à la masse par une charge adaptée (ZCA), c'est-à-dire en principe une résistance égale à l'impédance caractéristique du câble, et il est prévu un couplage magnétique entre le premier (L1) et le quatrième (LA) élément de filtrage.

3. Dispositif d'amplification selon l'une des revendications 1 ou 2, caractérisé en ce que les premier et quatrième éléments d'une part (L1, LA), et les deuxième et troisième éléments d'autre part (C1, CA), sont égaux entre eux.

4. Dispositif d'amplification, destiné à être inséré dans un câble d'un réseau de distribution de télévision par câble, comportant deux voies en parallèle réunies à chacune de leurs extrémités pour former à chaque fois une borne d'entrée/sortie (U, B), la première voie étant munie d'un amplificateur (1) amplifiant dans une première bande de fréquences, la seconde voie étant munie d'un amplificateur (2) amplifiant dans une direction opposée à celle du premier amplificateur et dans une seconde bande de fréquences exclusive de la première, avec à partir de chacune des bornes un premier élément de filtrage (L1) à caractéristique du premier type, pour transmettre ou recevoir les signaux de la première voie, et un deuxième élément de filtrage (C1) à caractéristique du second type, pour transmettre ou recevoir les signaux de la seconde voie, caractérisé en ce qu'il est muni d'un transformateur (TA) qui possède un enroulement connecté en parallèle sur l'un des éléments de filtrage (L1) transmettant les signaux de l'une des voies (1), et un autre enroulement dont une extrémité est reliée à la masse via une charge adaptée (ZCA), c'est-à-dire en principe une résistance égale à l'impédance caractéristique du câble, et dont l'autre extrémité est connectée à l'autre des voies (2).

5. Dispositif d'amplification selon l'une quelconque des revendications précédentes, caractérisé en ce que des éléments de filtrage à caractéristique du premier type sont de simples inductances (L1, LA), et/ou des éléments de filtrage à caractéristique du second type sont de simples condensateurs (C1, CA).

6. Dispositif d'amplification selon la revendication précédente, caractérisé en ce que le quotient de la valeur d'une inductance par celle d'une capacité est égal au carré de la valeur de l'impédance caractéristique du câble (L / C = ZC²).

7. Dispositif d'amplification selon l'une quelconque des revendications précédentes, caractérisé en ce que l'élément inverseur de la polarité des signaux est un transformateur (TA).

## Patentansprüche

1. Verstärkeranordnung zum Einfügen in ein Kabel eines Kabelfernseh-Verteilungsnetzes mit zwei parallelen Strecken, deren Enden miteinander verbunden sind zum Bilden eines Eingangs/Ausgangs-Anschlusses (U, B), wobei die erste Strecke mit einem Verstärker (1) versehen ist, der in einem ersten Frequenzband arbeitet, wobei die zweite Strecke mit einem Verstärker (2) versehen ist, der in einer Richtung arbeitet, die der des ersten Verstärkers entgegengesetzt ist und in einem zweiten Frequenzband, das anders ist als das erste Band, mit, ausgehend von jedem der Anschlüsse, einem ersten Filterelement (L1) mit einer Kennlinie vom ersten Typ zum Senden oder Empfangen der Signale der ersten Strecke, und einem zweiten Filterelement (C1) mit einer Kennlinie von einem zweiten Typ, komplementär zu dem ersten Typ zum Senden oder Empfangen der Signale der zweiten Strecke, dadurch gekennzeichnet, daß die zwei Strecken durch ein Gebilde miteinander gekoppelt werden, das aus der Reihenschaltung von Elementen zusammengesetzt ist und ausgehend von der ersten Strecke ein drittes Filterelement (CA) aufweist mit einer Kennlinie vom zweiten Typ, und eine viertes Filterelement (LA) mit einer Kennlinie vom ersten Typ, und daß das Gebilde (L1, C1, CA, LA) bestehend aus den Filterelementen ausgewuchtet ist, wobei der Verbindungspunkt (3, 4) des dritten und des vierten Filterelementes über eine angepaßte Belastung (ZCA) nach Erde verbunden ist, d.h. im Grunde einen Widerstand gleich dem Wellenwiderstand des kabels, und daß ein Signalpolaritätswandler (TA) in Reihe zwischen den beiden Filterelementen vorgesehen ist.

2. Verstärkeranordnung zum Einfügen in ein Kabel eines Kabelfernseh-Verteilungsnetzes mit zwei parallelen Strecken, deren Enden miteinander verbunden sind zum Bilden eines Eingangs/Ausgangs-Anschlusses (U, B), wobei die erste Strecke mit einem Verstärker (1) versehen ist, der in einem ersten Frequenzband arbeitet, wobei die zweite Strecke mit einem Verstärker (2) versehen ist, der in einer Richtung arbeitet, die der des ersten Verstärkers entgegengesetzt ist und in einem zweiten Frequenzband, das anders ist als das erste Band, mit, ausgehend von jedem der Anschlüsse, einem ersten Filterelement (L1) mit einer Kennlinie vom ersten Typ zum Senden oder Empfangen der Signale der ersten Strecke, und einem zweiten Filterelement (C1) mit einer Kennlinie von einem zweiten Typ, komplementär zu dem ersten Typ zum Senden und Empfangen der Signale der zweiten Strecke, dadurch gekennzeichnet, daß die zwei Strecken durch ein Gebilde miteinander gekoppelt werden, das aus der Reihenschaltung von Elementen zusammengesetzt ist und ausgehend von der ersten Strecke ein drittes Filterelement (CA) aufweist mit einer Kennlinie vom zweiten Typ, und eine viertes Filterelement (LA) mit einer Kennlinie vom ersten Typ, und daß das Gebilde (L1, C1, CA, LA) bestehend aus den Filterelementen ausgewuchtet ist, wobei der Verbindungspunkt (3, 4) des dritten und des vierten Filterelementes über eine angepaßte Belastung (ZCA) nach Erde verbunden ist, d.h. im Grunde einen Widerstand gleich dem Wellenwiderstand des Kabels aufweist, und daß zwischen dem ersten (L1) und dem vierten Filterelement (LA) eine magnetische Kopplung vorgesehen ist.

3. Verstärkeranordnung nach einem der Ansprüche 1 oder 2, dadurch gekennzeichnet, daß einerseits das erste und das vierte Element (L1, LA) und andererseits das dritte und das vierte Element (C1, CA) einander gleich sind.

4. Verstärkeranordnung zum Einfügen in ein Kabel eines Kabelfernseh-Verteilungsnetzes mit zwei parallelen Strecken, deren Enden miteinander verbunden sind zum Bilden eines Eingangs/Ausgangs-Anschlusses (U, B), wobei die erste Strecke mit einem Verstärker (1) versehen ist, der in einem ersten Frequenzband arbeitet, wobei die zweite Strecke mit einem Verstärker (2) versehen ist, der in einer Richtung arbeitet, die der des ersten Verstärkers entgegengesetzt ist und in einem zweiten Frequenzband, das anders ist als das erste Band, mit, ausgehend von jedem der Anschlüsse, einem ersten Filterelement (L1) mit einer Kennlinie vom ersten Typ zum Senden oder Empfangen der Signale der ersten Strecke, und einem zweiten Filterelement (C1) mit einer Kennlinie von einem zweiten Typ, komplementär zu dem ersten Typ zum Senden oder Empfangen der Signale der zweiten Strecke, dadurch gekennzeichnet, daß die Anordnung einen Transformator (TA) aufweist, von dem eine Wicklung parallel zu einem der Filterelemente (L1) liegt, das die Signale einer der Strecken (1) überträgt, und wobei von einer weiteren Wicklung ein Ende über eine angepaßte Belastung (ZCA) nach Erde verbunden ist, d.h. im Grunde einen Widerstand gleich dem Wellenwiderstand des Kabels aufweist, und deren anderes Ende mit der anderen Strecke (2) verbunden ist.

5. Verstärkeranordnung nach einem der vorstehenden Ansprüche, dadurch gekennzeichnet, daß Filterelemente mit einer Kennlinie vom ersten Typ einfache Induktivitäten (L1, LA) sind, und/oder Filterelemente mit einer Kennlinie vom zweiten Typ einfache Kondensatoren (C1, CA) sind.

6. Verstärkeranordnung nach dem vorstehenden Anspruch, dadurch gekennzeichnet, daß der Quotient des Wertes einer Induktivität geteilt durch den Wert einer Kapazität gleich dem Quadrat des Wellenwiderstandswertes des Kabels (L/C = ZC²) ist.

7. Verstärkeranordnung nach einem der vorstehenden Ansprüche, dadurch gekennzeichnet, daß der Signalpolaritätswandler ein Transformator (TA) ist

## Claims

1. An amplifying device intended for incorporation in a cable of a cable television distribution network, comprising two parallel paths each having their ends interconnected for forming an input/output terminal (U, B), the first path being provided with an amplifier (1) operating in a first frequency band, the second path being provided with an amplifier (2) operating in a direction opposite to that of the first amplifier and in a second frequency band other than the first band, and, from each terminal, a first filter element (L1) having a characteristic of a first type for transmitting or receiving the signals of the first path, and a second filter element (C1) having a characteristic of a second type complementary to the first type for transmitting or receiving the signals of the second path, characterized in that the two paths are coupled to each other by means of an assembly composed of the series arrangement of elements and comprising, from the first path, a third filter element (CA) having a characteristic of the second type and a fourth filter element (LA) having a characteristic of the first type, and in that, with the assembly (L1, C1, CA, LA) constituted by the filter elements being balanced, the junction point (3,4) of the third and the fourth filter element is connected to ground via a matched load (ZCA), i.e. in principle, a resistance equal to the characteristic impedance of the cable, and in that a signal polarity inverting element (TA) is arranged in series between the two filter elements.

2. An amplifying device intended for incorporation in a cable of a cable television distribution network, comprising two parallel paths each having their ends interconnected for forming an input/output terminal (U, B), the first path being provided with an amplifier (1) operating in a first frequency band, the second path being provided with an amplifier (2) operating in a direction opposite to that of the first amplifier and in a second frequency band other than the first band, and, from each terminal, a first filter element (L1) having a characteristic of a first type for transmitting or receiving the signals of the first path, and a second filter element (C1) having a characteristic of a second type complementary to the first type for transmitting or receiving the signals of the second path, characterized in that the two paths are coupled to each other by means of an assembly composed of the series arrangement of elements and comprising, from the first path, a third filter element (CA) having a characteristic of the second type and a fourth filter element (LA) having a characteristic of the first type, and in that, with the assembly (L1, C1, CA, LA) constituted by the filter elements being balanced, the junction point of the third and the fourth filter element is connected to ground via a matched load (ZCA), i.e. in principle, a resistance equal to the characteristic impedance of the cable, and in that a magnetic coupling is provided between the first (L1) and the fourth (LA) filter element.

3. An amplifying device as claimed in any one of Claim 1 or 2, characterized in that the first and the fourth element (L1, LA), on the one hand, and the second and the third element (C1, CA), on the other hand, are equal to each other.

4. An amplifying device intended for incorporation in a cable of a cable television distribution network, comprising two parallel paths each having their ends interconnected for forming an input/output terminal (U, B), the first path being provided with an amplifier (1) operating in a first frequency band, the second path being provided with an amplifier (2) operating in a direction opposite to that of the first amplifier and in a second frequency band other than the first band, and, from each terminal, a first filter element (L1) having a characteristic of the first type for transmitting or receiving the signals of the first path, and a second filter element (C1) having a characteristic of the second type for transmitting or receiving the signals of the second path, characterized in that it includes a transformer (TA) having a winding arranged in parallel with one of the filter elements (L1) transmitting the signals of one of the paths (1), and a further winding, one end of which is connected to ground via a matched load (ZCA), i.e. in principle, a resistance equal to the characteristic impedance of the cable, and whose other end is connected to the other one of the paths (2).

5. An amplifying device as claimed in any one of the preceding Claims, characterized in that the filter elements having a characteristic of the first type are simple inductances (L1, LA), and/or filter elements having a characteristic of the second type are simple capacitors (C1, CA).

6. An amplifying device as claimed in the preceding Claim, characterized in that the quotient of the value of an inductance divided by the value of a capacitance is equal to the square of the characteristic impedance value of the cable (L/C = ZC²).

7. An amplifying device as claimed in any one of the preceding Claims, characterized in that the signal polarity inverting device is a transformer (TA).
